# EUROPÄISCHE PATENTSCHRIFT

(11) **EP 3 112 962 B1**
(45) Veröffentlichungstag und Bekanntmachung des Hinweises auf die Patenterteilung: **04.03.2020**
(21) Anmeldenummer: 16168694.4
(22) Anmeldetag: 09.05.2016
(51) Int. Cl.: G05B 15/02

(54) **VERFAHREN ZUM ANSTEUERN EINER GEBÄUDEINSTALLATION**
METHOD FOR CONTROLLING A BUILDING INSTALLATION
PROCEDE DESTINE A LA COMMANDE D'UNE INSTALLATION DE BATIMENT

(30) Priorität: 30.06.2015 DE 102015110476
(43) Veröffentlichungstag der Anmeldung: 04.01.2017
(73) Patentinhaber: Insta GmbH, 58509 Lüdenscheid (DE)
(72) Erfinder: Detzner, Peter, 58089 Hagen (DE); Neuhaus, Stefan, 44287 Dortmund (DE)

(56) Entgegenhaltungen:
- EP-B1- 2 596 408
- AT-B- 413 059
- US-A1- 2010 303 289
- US-A1- 2011 130 881

## Beschreibung

Die Erfindung betrifft ein Verfahren zum Ansteuern einer Gebäudeinstallation in Abhängigkeit von zumindest einer in dem Überwachungsbereich eines Situationsmelders detektierten vordefinierten personenbezogenen Situation.

Gebäudetechnische Installationssysteme können eine Vielzahl von unterschiedlichen Aktoren umfassen. Aktoren im Rahmen dieser Ausführungen sind jedwede von einer Steuereinheit ansteuerbare Bestandteile eines Gebäudeinstallationssystems. Somit handelt es sich hierbei beispielsweise auch um Schnittstellen, etwa Kommunikationsschnittstellen neben den üblichen Aktoren wie Raumbeleuchtung, Beschattungseinrichtungen oder dergleichen. Gebäudeinstallationen, wie beispielsweise eine Raumbeleuchtung, eine Beschattungseinrichtung oder dergleichen werden in vielen Fällen situationsabhängig angesteuert. Bei einer Beschattungseinrichtung, wie beispielsweise einer Jalousieeinrichtung, kann diese in Abhängigkeit vom einfallenden Sonnenlicht angesteuert werden. Zum Ansteuern einer Raumbeleuchtung werden typischerweise Präsenzmelder eingesetzt, die die Raumbeleuchtung und somit eine oder mehrere Leuchten als Aktor bzw. Aktoren ansteuert, wenn die Präsenz einer oder mehrerer Personen in dem Raum, etwa beim Eintreten detektiert wird. Neben Präsenzmeldern, wie vorbeschrieben, werden auch Situationsmelder eingesetzt, mit denen der Überwachungsbereich zweidimensional erfasst wird. Mit solchen Situationsmeldern ist eine ortsaufgelöste Erfassung innerhalb des Überwachungsbereiches möglich. Die Auflösung in der Erfassung des Überwachungsbereiches ist von dem Auflösungsvermögen des dem Situationsmelder zugehörigen Sensors abhängig. Bei einem Situationsmelder mit ortsaufgelöster Erfassung seines Überwachungsbereiches ist der Sensor in aller Regel als Flächensensor ausgelegt. Bei diesem kann es sich beispielsweise um einen Kamerasensor handeln. Derartige Situationsmelder erlauben ein sehr viel detaillierteres Erfassen des diesem zugeordneten Überwachungsbereiches. Wenn mit derartigen Situationsmeldern eine ortsaufgelöste Erfassung vorgenommen werden soll, beispielsweise eine Unterteilung seines Überwachungsbereiches in zwei oder mehr Teilbereiche, die auch unabhängig voneinander ausgewertet werden können, bedarf dieses einer entsprechenden Einrichtung des Situationsmelders, was typischerweise im Zusammenhang mit seiner Inbetriebnahme vorgenommen wird.

Aus DE 10 2011 102 038 A1 ist eine Raumüberwachung bekannt, die zum Zwecke des Erfassens einer zuvor definierten Geste einer in dem Raum befindlichen Person zum Ansteuern einer Gebäudeinstallation den Raum überwacht. In dem Raum sind ein oder mehrere virtuelle Flächen definiert, die virtuelle Bedienschalter darstellen. Die, einem solchen virtuellen Schalter zugeordnete Gebäudeinstallation wird angesteuert, wenn über das Raumüberwachungssystem festgestellt wird, dass seitens einer in dem Überwachungsbereich befindlichen Person eine auf diesen virtuellen Sensor gerichtete Zeigegeste ausgeübt wird. Um dieses zu gewährleisten, muss die Geste konkret einem Sensor zugeordnet sein, weshalb die Geste mit nur einem geringen Abstand zu dem virtuellen Sensor durchgeführt werden muss, wobei ein solcher Abstand mit maximal 50 cm angegeben ist. Insofern ersetzt bei dem aus diesem Stand der Technik bekannt gewordenen Konzept der virtuelle Schalter einen ansonsten physisch vorhandenen.

EP 2 659 743 B1 offenbart ein Verfahren zum Korrigieren der Körperhaltung eines Benutzers, wenn sich dieser benachbart zu einer Lichtquelle, beispielsweise einer Schreibtischleuchte, befindet, und zwar in sitzender Stellung. Die Körperhaltung der Person selbst wird durch eine der Leuchte zugeordnete Ultraschallsensorik ermittelt. In Abhängigkeit von der festgestellten Körperhaltung wird die Leuchte entsprechend angesteuert, beispielsweise bezüglich ihrer Lichtfarbe geändert, um auf diese Weise die Person dazu zu bewegen, die als korrekt angesehene Körperhaltung wieder einzunehmen. Insofern wird bei diesem Verfahren abhängig von der Körperhaltung der Person bzw. einer festgestellten Änderung die Leuchte als Gebäudeinstallation beeinflusst.

Das aus diesem Dokument bekannte Verfahren eignet sich jedoch nicht zum Überwachen eines Raumes oder eines größeren Überwachungsbereiches, vor allem dann nicht, wenn in diesem mehrere Personen durch ein und dieselbe Sensorik auf das Eintreten von Zustandsänderungen überwacht werden sollen.

US 2011/0130881 A1 beschreibt eine Raumüberwachung für die Steuerung einer Klimaanlage auf Basis von thermoempfindlichen Modulen. Diese thermoempfindlichen Module sind in Wände eingelassen und können im Raum befindliche Personen detektieren. Ist eine Person im Raum, wird der Raum entsprechend temperiert. Ferner können Nutzungsprofile erstellt werden, die eine vorausschauende Charakteristik haben, sodass beim Verlassen eines Raumes ein anderer Raum schon im Vorhinein entsprechend temperiert wird.

Aus EP 2 596 408 B1 ist ein Verfahren zum Ansteuern einer Gebäudeinstallation in Abhängigkeit von zumindest einer in dem Überwachungsbereich eines Situationsmelders detektierten vordefinierten personenbezogenen Situation bekannt. Als Situationsmelder dient eine Kamera, die gemäß einem Beispiel einen Raum von der Decke aus überwacht. Über diese erfolgt eine Zutrittserfassung. Ist eine Person in den Raum eingetreten, wird dieses auf einem Überwachungsmonitor kenntlich gemacht. Innerhalb des Überwachungsraumes wird in Abhängigkeit von der eingetretenen Person eine dynamische Zone definiert, die im Rahmen der Überwachung auf vordefinierte Zustände und Zustandsänderungen überwacht wird. Eine Auswertung erfolgt über Bildvergleiche.

AT 413 059 B beschreibt eine Einrichtung für die Kontrolle, Steuerung und Regelung der Haustechnik-Anlagen eines Gebäudes. Hierzu werden Nutzerprofile einzelner Personen erstellt. Durch statistische Auswertungen wird der Eintritt einer Person in einen Raum ermittelt und die Raumbeleuchtung in diesem Raum in eine erste Beleuchtungsstufe geschaltet, wenn zu erwarten ist, dass eine Person in den Raum eintreten wird. Ist eine Person tatsächlich in den Raum eingetreten, wird die Beleuchtungseinrichtung auf die übliche Helligkeit gefahren. In dem Raum selbst wird die Bewegung der eingetretenen Person nachverfolgt. Zu den in diesem Stand der Technik beschriebenen Tracking-Algorithmen wird nichts Näheres ausgeführt.

Ausgehend von diesem diskutierten Stand der Technik liegt der Erfindung daher die Aufgabe zugrunde, ein Verfahren zum Ansteuern einer oder auch mehrerer Gebäudeinstallationen vorzuschlagen, mit dem mit einem Situationsmelder auch mehrere, in seinem Überwachungsbereich befindliche Personen im Hinblick auf Zustandsänderungen überwacht werden können, um bei Feststellen bestimmter Situationen, eine oder mehrere Gebäudeinstallationen anzusteuern. Zudem liegt die Aufgabe zugrunde, eine solche Überwachung in reproduzierbarer Art und Weise möglichst mit geringem Auswerteaufwand vorzunehmen.

Gelöst wird diese Aufgabe erfindungsgemäß durch ein eingangs genanntes Verfahren, welches mit folgenden Schritten durchgeführt wird:
- in einem ersten Schritt eine Zutrittserfassung vorgenommen wird, um zu erfassen, ob eine Person in den Überwachungsbereich eintreten wird, eintritt oder eingetreten ist,
- wobei bei positiver Zutrittserfassung und nicht personenbelegtem Überwachungsbereich eine auf die Überwachungsbereich Einfluss nehmende Gebäudeinstallation in einen ersten Zustand geschaltet werden kann,
- nach Detektion eines Personenzutritts in den Überwachungsbereich in einem zweiten Schritt der Überwachungsbereich in Bezug auf das Eintreten der zumindest einen personenbezogenen Situation überwacht wird, indem
   - jeder in den Überwachungsbereich eintretenden Person ein Tracker zugeordnet wird, wobei als Tracker ein die Person in vereinfachter Geometrie repräsentierender, virtueller Körper verwendet wird, dem mit von dem Situationsmelder erfassten Daten abgeleiteten, personenspezifischen Zustandsdaten zugeordnet sind, und
   - anschließend die Überwachung dieser Person in Bezug auf ihre Zustandsänderungen über die damit einhergehenden Änderungen in den Zustandsdaten des Trackers erfolgt, und
- eine Ansteuerung wenigstens einer Gebäudeinstallation vorgenommen wird, wenn die dem Tracker zugeordneten personenspezifischen Zustandsdaten denjenigen einer vorbestimmten Situation entsprechen.

Bei diesem Verfahren wird nach positiver Zutrittserfassung die eigentliche Personenzustandsüberwachung in Bezug auf das Eintreten vorbestimmter Situationen in dem Überwachungsbereich durchgeführt. Bei derartigen personenbezogenen Situationen kann es sich beispielsweise um die Präsenz einer Person in einem bestimmten Bereich oder an einer bestimmten Stelle in dem Überwachungsbereich handeln, ebenso an die Haltung einer Person, ob diese Person beispielsweise steht oder sitzt. Eine solche Situation kann von der Position und/oder der Körperhaltung einer Einzelperson abhängig sein, wie beispielsweise das Eintreten in einen Überwachungsbereich, das Hingehen zu einem Schreibtischarbeitsplatz und das sich Hinsetzen. Wird eine solche Situation im Überwachungsbereich erkannt, wobei je nach Durchführung des Verfahrens es ausreichen kann, eine sich an den Arbeitsplatz hingesetzte Person zu detektieren, kann beispielsweise die Beleuchtung als beispielhafte Gebäudeinstallation auf eine Schreibtischbeleuchtung eingestellt werden. Befindet sich der Arbeitsplatz im Bereich eines Fensters, kann beispielsweise zudem über eine Beschattungsanlage, falls vorhanden, Einfluss auf die Arbeitsplatzbeleuchtung genommen werden. Gleiches gilt für andere Gebäudeinstallationen, wie etwa eine Klimatisierung oder eine Heizungsansteuerung. Personenbezogene Situationen können im Überwachungsbereich auch im Zusammenhang mit mehreren Personen ermittelt werden. Als Beispiel sei an dieser Stelle eine Präsentation in einem hierfür geeigneten Raum genannt. Befindet sich an einer vordefinierten Stelle bzw. in einem vordefinierten Präsentatorbereich eine stehende Person und befinden sich in dem Zuhörerbereich eine oder mehrere sitzende Personen, kann die Raumbeleuchtung auf eine Präsentationsbeleuchtung geschaltet werden. Kombiniert werden kann dieses mit einem gleichzeitigen Hochfahren eines Beamers, so dass, ohne dass eine der im Raum befindlichen Personen aktiv auf eine Gebäudeinstallation Einfluss genommen hat, der Raum bzw. der Überwachungsbereich im Bezug auf die hierfür relevanten Gebäudeinstallationen für eine Präsentation bereitet wird.

Im Vordergrund des Verfahrens steht, dass jeder in den Überwachungsbereich eintretenden Person ein Tracker zugeordnet wird, welchem Tracker aus den mit dem Situationsmelder erfassten Daten abgeleitete, personenspezifische Zustandsdaten zugeordnet werden. Dies bedeutet, dass nach der Definition eines solchen Trackers zu einer Person im Zuge der Überwachung dieser Person im Hinblick auf ihr Verhalten und ihre Bewegung in dem Überwachungsbereich nicht die Person selbst im Hinblick auf Eintreten von Zustandsänderungen überwacht werden muss, sondern nur die Zustandsdaten des Trackers. Ein solcher Tracker zeichnet sich dadurch aus, dass seine Geometrie verglichen mit derjenigen einer Person erheblich vereinfacht ist, so dass eine Überwachung des Trackers in Bezug auf Zustandsänderungen auch mit geringeren Ressourcen durchgeführt werden kann. Dieses macht sich naturgemäß dann besonders bemerkbar, wenn die von einem Situationsmelder erfassten Daten im Hinblick auf mehrere Personenzustandsänderungen hin ausgewertet werden sollen.

Um besonders aussagekräftige und daher in einem hohen Maße reproduzierbare Überwachungsdaten zu erhalten, ist in einem bevorzugten Ausführungsbeispiel vorgesehen, dass der Überwachungsbereich dreidimensional erfasst und überwacht wird. Auch wenn dieses mit Kamerasensoren möglich ist, ist eine Datenerfassung und anschließende Datenauswertung sehr viel einfacher, wenn durch den Situationsmelder eine Tiefeninformation in Bezug auf den von ihm betrachteten Überwachungsbereich bereitgestellt wird. Diese Tiefeninformation kann beispielsweise im Infrarotbereich beispielsweise durch einen sogenannten Time-Of-Flight-Sensor bereitgestellt werden. Derartige Tiefeninformationen lassen sich auch über Stereovisionen oder unter Ausnutzung des so genannten Structured Light Konzeptes bereitstellen. Die Tiefeninformation, die durch einen solchen Situationsmelder bereitgestellt wird, kann nach Art einer Tiefenkarte oder auch einer Punktwolke der nachgeschalteten Auswertung zugeführt werden bzw. die Auswertung kann anhand einer solchen Tiefenkarte oder einer solchen Punktwolke bzw. der durch Bewegungen der Person und damit Änderungen in dem dieser Person zugeordneten Tracker in der vorhandenen Tiefeninformation vorgenommen werden. In besonderer Weise können in einer ortsaufgelösten Tiefeninformation eine Vielzahl unterschiedlicher personenbezogene Situationen in einem Überwachungsbereich erkannt werden. Zu diesem Zweck wird man die Tiefeninformation mit Blickrichtung von oben gewinnen, mithin den Situationsmelder deckenseitig anbringen. Mit hinreichender Auflösung, was auch mit einem Time-Of-Flight-Sensor ohne weiteres möglich ist, können auf diese Weise Änderungen in der Gesamthöhe eines Trackers oder auch dessen umfängliche Ausdehnung erfasst werden.

Die Nachverfolung des Trackers erfolgt unter Verwendung einer solchen ortsaufgelösten Tiefeninformation somit in Bezug auf die x-y-Ebene des Überwachungsbereiches sowie in der gewonnen Tiefeninformation, also in z-Richtung. Ohne Weiteres beobachtet werden können auch weitere Daten, beispielsweise die Aufenthaltsdauer, Bewegungsmuster und dergleichen.

Bei einer Verwendung von Tiefeninformationen für die Auswahl und Weiterverfolgung eines Trackers kann dieser in einem besonders einfachen Fall als Punkt definiert werden, wobei sich dieser typischerweise in der maximalen Höhe der durch diesen Tracker repräsentierten Person befindet. Eine Bewegung dieser Person im Überwachungsbereich in der x-y-Ebene kann durch Wandern des Trackers in der ortsaufgelösten Tiefeninformation mitverfolgt werden. Ändert die Person ihre Höhe, also setzt sich diese beispielsweise hin, ändert sich die Tiefeninformation und somit der Abstand des Trackers vom Boden des Überwachungsbereiches bzw. vom Sensor, sodass auch derartige Veränderungen verfolgt und ausgewertet werden.

Als Tracker wird man typischerweise einen Körper mit einfacher Geometrie einsetzen. Für eine Person hat sich gezeigt, dass eine Vielzahl unterschiedlicher personenbezogener Situationen mit hinreichender Reproduzierbarkeit erkannt werden können, wenn als Tracker ein Zylinder als geometrischer Körper verwendet wird. Die Höhe des Zylinders gibt die Größe einer in dem Überwachungsbereich eingetretenen Person an. Der Durchmesser wird durch den Hüllumfang des Körpers bestimmt. Setzt sich eine Person, der ein solcher Tracker zugeordnet ist, hin, ändert sich die Höhe des als Tracker verwendeten Zylinderkörpers und zudem vergrößert sich der Durchmesser des Zylinders durch die dann vom Oberkörper nach vorne abragenden Oberschenkel. Eine solche Situation kann wiederum eindeutig von einer Situation unterschieden werden, in der eine Person liegt, beispielsweise am Boden. Eine solche am Boden liegende Stellung einer Person kann dadurch erfasst werden, dass diese unterhalb des Tiefenerfassungsbereiches liegt, mithin ein Tracker in Richtung der Tiefe aus dem Überwachungsbereich ausgetreten ist, oder dadurch, dass sich die Höhe des Trackers gegenüber der sitzenden Position weiter verringert hat und sich der Durchmesser gleichzeitig erheblich vergrößert hat. In gleicher Weise können auch Armbewegungen oder Zeigegesten erfasst werden, durch die der Umfang des Trackers als Hüllkurve bei gleichbleibender Höhe desselben vergrößert wird. In einem solchen Fall können die von dem Situationsmelder erfassten Rohdaten zusätzlich auf die Zeigerichtung hin ausgewertet werden. Für eine solche Auswertung eignet sich insbesondere eine Tiefeninformation, die als Punktwolke vorliegt. Dabei kann das Verfahren so betrieben werden, dass eine Richtungsauswertung einer Armbewegung, um zu überprüfen, ob es sich hierbei um eine Zeigegeste handelt oder nicht, erst dann durchgeführt wird, wenn eine, eine solche Geste nahelegende Zustandsänderung in dem Tracker festgestellt worden ist. Dieses reduziert den Auswerteaufwand.

Für die Personenüberwachung ist es ausreichend, dass die Zustandsdaten des Trackers in Bezug auf bestimmte Änderungen hin untersucht und für nachfolgende Auswertungen gespeichert werden.

Die Personenüberwachung im Überwachungsbereich des Situationsmelders macht nur Sinn, wenn sich in dem Überwachungsbereich tatsächlich zumindest eine Person befindet. Daher erfolgt in einem ersten Schritt eine Zutrittserfassung, ob eine Person in den Überwachungsbereich eintreten wird, eintritt oder eingetreten ist. Befindet sich noch keine Person im Überwachungsbereich, zu welcher Feststellung ein Anwesenheitszähler geführt wird, kann vorgesehen sein, dass bei positiver Zutrittserfassung eine oder auch mehrere Gebäudeinstallationen in einen Grund- bzw. Zutrittsmodus geschaltet werden. Hierbei kann es sich um die allgemeine Raumbeleuchtung, die Beschattung oder dergleichen handeln. Eine solche Zutrittserfassung kann mit dem Situationsmelder selbst vorgenommen werden. Hierfür eignen sich auch andere Sensoren, beispielsweise im Zutrittsbereich positionierte Näherungssensoren oder mit anderen Technologie arbeitenden Bewegungssensoren. Es versteht sich, dass wenn eine Zutrittserfassung mit dem Situationsmelder vorgenommen wird, die Zutrittserfassung in seinem Überwachungsbereich erfolgt. Werden andere Sensoren eingesetzt, kann eine solche Zutrittserfassung vorgenommen werden, bevor eine Person in den konkreten Überwachungsbereich des Situationsmelders eintritt.

Neben einer Zutrittskontrolle wird typischerweise auch eine Austrittskontrolle durchgeführt, um einen Raumbelegungszähler aktuell zu halten, auch wenn eine oder mehrere Personen den Überwachungsbereich verlassen oder verlassen haben.

Verlässt eine Person den Überwachungsbereich, ist in einer Weiterbildung vorgesehen, das Zustandsänderungsprofil dieser Person im Überwachungsbereich für zukünftige Anwendungen zu speichern. Dieses kann für die Zwecke einer vorausschauenden Gebäudeinstallationsansteuerung vorgesehen sein. Werden bestimmte Zustandsänderungsmuster festgestellt, beispielsweise, dass eine in den Überwachungsbereich eintretende Person sich an den Arbeitsplatz begibt und hinsetzt, kann die einsetzende Bewegung zum Arbeitsplatz hin als Feststellung genutzt werden, dass diese bereits eine oder mehrfach festgestellte Situationsänderung wieder eintreten wird, um sodann den oder die Gebäudeinstallationen bereits in den Arbeitsplatzmodus zu bringen, bevor sich die Person an den Arbeitsplatz begeben und hingesetzt hat.

Durch eine solche Auswertung bzw. Verarbeitung der Bewegungsprofile von in dem Überwachungsbereich eingetretener Personen können die definierten Situationen, bei denen bestimmte Gebäudeinstallationen in einer vordefinierten Weise angesteuert werden sollen, allein durch Darstellen der Endsituation, beispielsweise das Sitzen am Arbeitsplatz, definiert werden. Die Zustandsänderungen bis zum Erreichen dieser Situation können auch durch Aufzeichnen der Zustandsänderungsprofile systemseitig erlernt werden. Allerdings ist eine Vorgabe einer solchen Ansteuersituation nicht unbedingt erforderlich, wenn die Position der an dem Arbeitsplatz sitzenden Person vordefiniert ist. Dann kann das Erreichen dieser Position im Überwachungsbereich, gekoppelt an eine Feststellung des Sich-Hinsetzens, als Auslösemoment zum Ansteuern der hierfür vorgesehenen Gebäudeinstallation angesehen werden.

Über abgelegte Benutzerprofile, beispielsweise im Bezug auf die jeweilige Aufenthaltsdauer, Gewohnheiten, Personenanzahl und dergleichen können Vorhersagen für die Raumnutzung gemacht werden, sodass auch diesbezüglich bereits im Vorfeld mögliche Gebäudeinstallationen in diejenige Ansteuerung gebracht werden, die für die vermutete Raumnutzung definiert ist.

Zusammengeführt werden können die über den Situationsmelder gewonnenen Raumnutzungsdaten mit den Daten weiterer Sensoren, beispielsweise Temperatur, CO₂-Gehalt, Anzahl der Personen, Lautstärke oder dergleichen, um in Abhängigkeit von der Gesamtsituation im Überwachungsbereich auf bestimmte Gebäudeinstallationen Einfluss zu nehmen. Dieses kann für das allgemeine Wohlbefinden der einen oder der mehreren Personen im Überwachungsbereich beitragen.

Von Bedeutung ist bei dem beschriebenen Verfahren, dass dieses für eine Erkennung von Notfallsituationen besonders geeignet ist. So kann beispielsweise bei Feststellen einer auf dem Boden liegenden Person, vor allem, wenn keine anderen Personen in dem Überwachungsbereich sind, eine Alarmfunktion ausgelöst wird. Dieses ist auch möglich, wenn im Bezug auf eine im Überwachungsbereich befindliche Person innerhalb eines bestimmten Zeitintervalls keine Zustandsänderung detektiert wird.

Die zu detektierenden personenbezogenen Situationen innerhalb des Überwachungsbereiches können auf unterschiedliche Weise vorgegeben werden. Eine Möglichkeit besteht beispielsweise darin, diese Situationen über eine entsprechende Programmierung systemseitig bekannt zu geben. In einem solchen Fall bietet es sich an, eine leichte verständliche Programmierung bereitzustellen, beispielsweise durch Vorgeben Prosa ähnlicher Befehle und/oder durch Abfrage bestimmter Konditionen, die gegeben sein müssten, damit eine bestimmte Situation dargestellt ist. Neben dem programmierten Vorgeben bestimmter Situationen, beispielsweise das Vorhandensein eines Trackers in einer bestimmten Höhe an einem bestimmten Punkt oder in einem bestimmten Bereich des Überwachungsbereiches, können solche Situationen auch eingelernt werden, beispielsweise indem eine Person die zu detektierende Situation einnimmt und systemseitig diese dann als zu erkennende Situation abspeichert wird. Die vorbeschriebenen Möglichkeiten des Definierens personenbezogener Situationen in dem Überwachungsbereich stellen keine abschließende Aufzählung dar, sondern sollen nur beispielhaft einige Möglichkeiten aufzeigen.

Nachfolgend ist die Erfindung anhand eines Ausführungsbeispiels unter Bezugnahme auf die beigefügte Figuren beschrieben. Es zeigen:
- **Fig.1:**: Eine schematisierte Draufsicht auf bzw. in einen Raum in einer Personenzutrittssituation ,
- **Fig.2:**: die Bewegung der in den Raum 1 eingetretenen Person und
- **Fig.3:**: eine durch Ändern der Körperhaltung der Person sich ergebende Änderung in der Geometrie eines der Person zugeordneten Trackers.

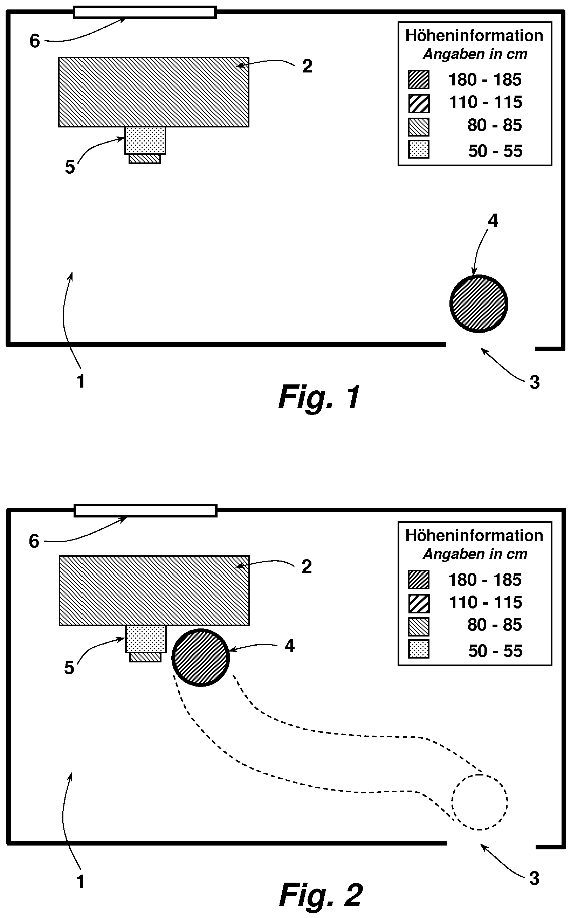

Figur 1 zeigt eine schematisierte Draufsicht auf einen Raum 1 eines nicht näher dargestellten Gebäudes. In dem Raum befindet sich ein Schreibtisch 2 als Arbeitsplatz. An der Decke des Raumes 1 ist ein nach unten blickender Situationsmelder angeordnet, der den in Figur 1 gezeigten Bereich des Raumes von oben blickend erfassen kann. Bei dem Situationsmelder handelt es sich um einen solchen, mit dem eine Tiefeninformation gewonnen werden kann. Konkret handelt es sich bei dem in diesem Ausführungsbeispiel benutzten Situationsmelder um einen mit Infrarottechnologie arbeitenden Time-Of-Flight-Sensor. Derartige Sensoren sind hinlänglich bekannt. Es erübrigt sich daher an dieser Stelle näher auf die Funktionsweise dieser Sensoren eingehen zu müssen. Im Ergebnis liefern diese Sensoren eine Tiefeninformation des erfassten Bereiches. Eine Tiefeninformation ist vor diesem Hintergrund eine Information in Bezug auf den Abstand eines IR-Reflektors zu dem Sensor. Die gewonnene Tiefeninformation wird bei dem dargestellten Ausführungsbeispiel in Form einer Tiefenkarte zur Verfügung gestellt bzw. als solche ausgewertet.

Der Situationsmelder ist an einen Installationsbus angeschlossen, dem ebenfalls eine zentrale Steuereinheit zugehörig ist. Die von dem Situationsmelder bereitgestellten Daten können von der Steuereinheit ausgelesen und ausgewertet werden. Über die Steuereinheit können ebenfalls Gebäudeinstallationen angesteuert werden, wie beispielsweise die Beleuchtung in dem Raum 1, eine Einstellung der Jalousie vor dem Fenster 6 sowie die Heizung bzw. Klimatisierung.

Der in Figur 1 gezeigte Bereich des Raumes 1 stellt den Überwachungsbereich des Situationsmelders dar. Der Situationsmelder dient zum Überwachen des Raumes 1 in Bezug auf eine Personenbelegung und deren Verhalten im Raum 1. Der Situationsmelder ist bei dem dargestellten Ausführungsbeispiel als Sensor zum Ansteuern der auf den Raum 1 Einfluss nehmenden Gebäudeinstallationen, und zwar in Abhängigkeit von der personenbezogenen Situation in dem Raum 1. Dieses ist nachfolgend anhand eines einfachen Beispiels näher erläutert:
Beim Eintreten einer Person in den Raum 1 durch die, einen Zutritt zu dem Raum 1 gestattende Türöffnung 3 wird durch den Situationsmelder der Zutritt dieser Person detektiert. Das Eintreten einer Person in den Raum 1 ist in Figur 1 gezeigt. Befindet sich in dem Raum 1 beim Zutritt der Person keine weitere Person, wird mit der Zutrittserfassung die Raumbeleuchtung angesteuert, um eine vorgegebene Grundhelligkeit in dem Raum einzustellen. Dieses erfolgt nur dann, wenn aufgrund einer durch einen Helligkeitssensor erfassten Helligkeit die Grundhelligkeit in dem Raum 1 nicht überschritten ist, beispielsweise durch ein strahlendes Sonnenlicht oder dergleichen.

Mit der Zutrittserfassung wird ein Tracker gesetzt, über den das weitere Verhalten der eingetretenen Person in dem Raum 1 verfolgt wird. Bei dem dargestellten Ausführungsbeispiel wird als Tracker eine einfache geometrische Figur, namentlich ein Zylinder, als Hüllkörper der eingetretenen Person eingesetzt. In Figur 1 ist in der Draufsicht dieser Tracker als Kreis mit dem Bezugszeichen 4 zu erkennen. Die Schraffur in dem Tracker 4 symbolisiert die Größe der Person und somit die Höhe des Trackers 4.

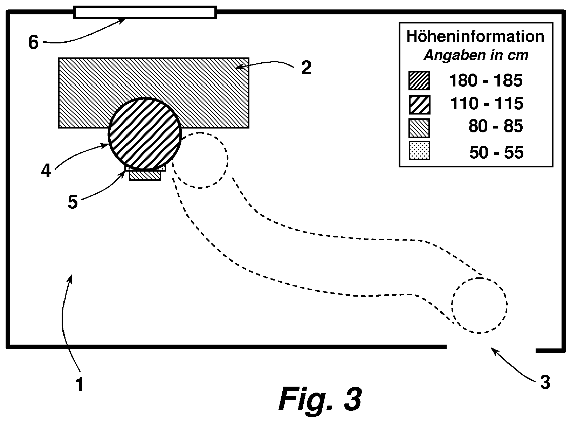

Über die von dem Situationsmelder bereitgestellten Daten wird die Bewegung des Trackers 4 in dem Raum 1 mitverfolgt. Bei dem dargestellten Ausführungsbeispiel bewegt sich die Person und damit ihr Tracker 4 in Richtung zu dem Schreibtisch 2 und bleibt neben dem Stuhl 4 stehen. Die Spur der Bewegung des Trackers 4 ist schematisiert in Figur 2 wiedergegeben. In einem nächsten Schritt setzt sich die Person hin. Dieses macht sich in einer Reduzierung der Höhe des Trackers durch eine Vergrößerung des Abstandes zu dem Time-Of-Flight-Sensor des Situationsmelders und in einer Vergrößerung des Durchmessers bemerkbar. Eine Durchmesservergrößerung muss nicht unbedingt mit dem Hinsetzen der Person einhergehen, insbesondere dann nicht, wenn die Oberschenkel der Person, die im Sitzen von dem Körper abragen und somit grundsätzlich für eine Vergrößerung des Durchmessers des Trackers 4 verantwortlich sind, durch den Schreibtisch 2 abgedeckt sind. In dieser personenbezogenen Situation, in der die Geometrie des Trackers 4 eindeutig von der Geometrie des Trackers 4 vor dem Hinsetzten sich unterscheidet, wird systemseitig davon ausgegangen, dass die Person am Schreibtisch 2 arbeiten möchte, weshalb, ohne Zutun der am Schreibtisch 2 sitzenden Person die für eine Arbeit an dem Schreibtisch 2 vorgesehene Beleuchtungssituation bereitgestellt wird. Dieses kann die Ansteuerung einer zur Beleuchtung der Arbeitsfläche des Schreibtisches 2 vorgesehenen Leuchte umfassen. Dringt zu viel Fremdlicht über das Fenster 6 auf den Schreibtisch 2, kann zudem Einfluss auf die Stellung der Fensterjalousien genommen werden. Figur 3 zeigt den Tracker 4 in seiner Ausbildung bei der an dem Schreibtisch 2 sitzenden Person.

Eine Ansteuerung der einen oder mehreren Gebäudeinstallationen nach Erreichen einer bestimmten personenbezogenen Situation im Raum 1, wie anhand des sich Hinsetzens an den Schreibtisch 2 zu dem in den Figuren dargestellten Ausführungsbeispiel beschrieben, kann vordefiniert sein. Ohne weiteres ist es im Zuge der Auswertung der Raumbenutzungsdaten möglich, dass systemseitig derartige Situationen eingelernt werden, diese mithin nicht im Zusammenhang mit der Installation des Situationsmelders vorgenommen werden müssen.

Das Bewegungs- bzw. Verhaltensprofil der Person in dem Raum 1 wird gespeichert, spätestens dann, wenn die Person den Raum 1 wieder verlässt. Hinterlegte Daten können auf sich wiederholende personenbezogene Zustandsdaten bzw. Zustandsänderungen ausgewertet werden. In aller Regel benutzt die den Raum 1 an dem Schreibtisch 2 nutzende Person denselben Weg von der Tür 3 zu dem Schreibtisch 2. Tritt eine Person in den Raum 1 ein und beginnt auf dem als wiederkehrend festgestellten Weg sich zu dem Schreibtisch 2 zu bewegen, kann die Arbeitsplatzbeleuchtungseinrichtung bereits vorausschauend angesteuert werden.

Das Auflösungsvermögen eines solchen Time-Of-Flight-Sensors ist sowohl in Tiefenrichtung als auch in x-y-Richtung hinreichend hoch, um unterschiedliche Personen anhand der Geometrie unterschiedlicher Tracker zu erkennen, vorausgesetzt, die Hüllgeometrie der Personen unterscheiden sich in hinreichender Weise. Ist dieses, wenn auch nur für manche Personen möglich, kann eine Raumeinrichtung in Bezug auf die Einfluss auf den Raum nehmenden Gebäudeinstallationen personalisiert vorgenommen werden.

Einfluss nehmen kann in die Auswertung auch als Personalisierungskriterium die Geschwindigkeit, mit der sich eine Person nach der Zutrittserfassung in dem Raum 1 bewegt.

Zu dem Raum 1 wird ein Belegungszähler geführt, über den jederzeit abfragbar ist, wie viele Personen sich aktuell in dem Raum 1 befinden. Es versteht sich, dass bei Austritt einer Person der Raumbelegungszähler entsprechend seinen Zählerstand um 1 reduziert.

Das vorbeschriebene sehr einfache Ausführungsbeispiel macht die Funktionsweise des beanspruchten Verfahrens deutlich. Es versteht sich, dass über die Nachverfolgung eines Trackers, der hierfür notwendige Ressourcenaufwand relativ gering ist und dass mit dem vorbeschriebenen System eine Vielzahl von in dem Raum 1 befindlichen Personen überwacht werden können. Aus der Beschreibung ergibt sich auch, dass verschiedenste Szenarien in dem Raum erkannt werden können, einzelpersonenbezogen oder auf eine Gruppe von Personen bezogen, um dann in Abhängigkeit von dem Eintreten bzw. Erkennen bestimmter Situationen ein oder mehrere Gebäudeinstallationen entsprechend anzusteuern. Die Erfindung lässt sich daher auch auf andere Weise im Rahmen der geltenden Ansprüche umsetzen, als konkret durch die Ausführungsbeispiele beschrieben.

### Bezugszeichenliste

- 1: Raum
- 2: Schreibtisch
- 3: Türöffnung
- 4: Tracker
- 5: Stuhl
- 6: Fenster

## Patentansprüche

1. Verfahren zum Ansteuern einer Gebäudeinstallation in Abhängigkeit von zumindest einer in dem Überwachungsbereich eines Situationsmelders detektierten vordefinierten personenbezogenen Situation, mit welchem Verfahren
- in einem ersten Schritt eine Zutrittserfassung vorgenommen wird, um zu erfassen, ob eine Person in den Überwachungsbereich eintreten wird, eintritt oder eingetreten ist,
- wobei bei positiver Zutrittserfassung und nicht personenbelegtem Überwachungsbereich eine auf die Überwachungsbereich Einfluss nehmende Gebäudeinstallation in einen ersten Zustand geschaltet werden kann,
- nach Detektion eines Personenzutritts in den Überwachungsbereich in einem zweiten Schritt der Überwachungsbereich in Bezug auf das Eintreten der zumindest einen personenbezogenen Situation überwacht wird, dadurchgekennzeichnet dass:
- jeder in den Überwachungsbereich eintretenden Person ein Tracker (4) zugeordnet wird, wobei als Tracker ein die Person in vereinfachter Geometrie repräsentierender, virtueller Körper verwendet wird, dem mit von dem Situationsmelder erfassten Daten abgeleiteten, personenspezifischen Zustandsdaten zugeordnet sind, und
- anschließend die Überwachung dieser Person in Bezug auf ihre Zustandsänderungen über die damit einhergehenden Änderungen in den Zustandsdaten des Trackers erfolgt, und
- eine Ansteuerung wenigstens einer Gebäudeinstallation vorgenommen wird, wenn die dem Tracker (4) zugeordneten personenspezifischen Zustandsdaten denjenigen einer vorbestimmten Situation entsprechen.

2. Verfahren nach Anspruch 1, **dadurch gekennzeichnet, dass** die Zutrittserfassung mit dem Situationsmelder durchgeführt und somit der Bereich der Zutrittserfassung Teil seines Überwachungsbereiches ist.

3. Verfahren nach Anspruch 1, **dadurch gekennzeichnet, dass** die Zutrittserfassung mittels eines im Zutrittsbereich befindlichen Zutrittssensors erfolgt.

4. Verfahren nach einem der Ansprüche 1 bis 3, **dadurch gekennzeichnet, dass** der Überwachungsbereich zur Überwachung von Änderungen in den Zustandsdaten des einer Person zugeordneten Trackers über durch einen 3-D Sensor erfasste Tiefeninformation, etwa in Bezug auf Änderungen einer Tiefenkarte oder einer Punktwolke des Überwachungsbereiches überwacht wird.

5. Verfahren nach Anspruch 4, **dadurch gekennzeichnet, dass** die Tiefeninformation mittels eines Time-Of-Flight-Sensors ermittelt wird.

6. Verfahren nach einem der Ansprüche 1 bis 5, **dadurch gekennzeichnet, dass** als Tracker ein die Person einfassender Hüllkörper eingesetzt wird.

7. Verfahren nach Anspruch 6, **dadurch gekennzeichnet, dass** als Hüllkörper ein Zylinder gewählt wird.

8. Verfahren nach einem der Ansprüche 1 bis 7, **dadurch gekennzeichnet, dass** die sich über die Zeit eines Aufenthaltes einer Person in dem Überwachungsbereich sich ändernden Zustandsdaten des Trackers in einem Datenspeicher für weitere Auswertungen als Verhaltensprofil abgelegt wird, nachdem diese Person den Überwachungsbereich verlassen hat.

9. Verfahren nach einem der Ansprüche 1 bis 8, **dadurch gekennzeichnet, dass** nach einer positiven Zutrittserfassung bei nichtpersonenbelegtem Überwachungsbereich die Beleuchtungen in dem Überwachungsbereich in einen ersten Zustand geschaltet wird.

10. Verfahren nach einem der Ansprüche 1 bis 9, **dadurch gekennzeichnet, dass** in Abhängigkeit von der oder den nach Eintreten einer Person über deren Tracker erfassten Zustandsdatenänderung eine oder mehrere der nachfolgenden Gebäudeinstallationen angesteuert werden:
- Beleuchtung,
- Beschattung,
- Klimatisierung,
- Heizung,
- Meldesystem für Vorkommnisse und/oder Gefahren.

11. Verfahren nach einem der Ansprüche 1 bis 10, **dadurch gekennzeichnet, dass** infolge der aus dem Überwachungsbereich gewonnenen Zustandsdaten des Trackers des oder der darin befindlichen Personen eine oder auch mehrere Gebäudeinstallationen beeinflusst werden, wenn die Sensordaten eines oder mehrerer Sensoren, die andere Daten als der Situationsmelder erfassen, in Bezug auf eine Gebäudeinstallationsbeeinflussung Anlass geben.

12. Verfahren nach Anspruch 8, **dadurch gekennzeichnet, dass** abgelegte Zustandsdatenprofile zu einer bestimmten Person auch wiederkehrende Verhaltensmuster untersucht werden und bei Feststellen wiederkehrender Verhaltensmuster und dem aktuellen Erkennen des Ansatzes, dass sich ein solches wiederholendes Verhaltensmuster im Begriff ist, sich aktuell zu wiederholen, die eine oder die mehreren, dem erwarteten Zustand zugeordnete Gebäudeinstallationen vorausschauend in der vordefinierten Art und Weise angesteuert werden.

## Claims

1. Method for controlling a building installation as a function of at least one predefined personal situation detected in the monitoring area of a situation detector, with which method
- in a first step, an access detection is carried out to detect whether a person will enter, enters or has entered the monitoring area,
- in the case of positive access detection and a monitoring range not occupied by persons, a building installation which influences the monitoring range can be switched to a first state,
- after detection of a person entering the monitoring area, the monitoring area is monitored in a second step with respect to the occurrence of the at least one personal situation, **characterized by the fact** that:
- a tracker (4) is assigned to each person entering the monitoring area, wherein a virtual body representing the person in simplified geometry is used as tracker, person-specific status data derived from the data detected by the situation detector being assigned to the virtual body, and
- this person is then monitored with respect to his or her changes of state via the associated changes in the status data of the tracker, and
- an activation of at least one building installation is carried out if the person-specific status data assigned to the tracker (4) correspond to those of a predetermined situation.

2. Method in accordance with Claim 1, **characterized by the fact** that the access detection is carried out with the situation detector and thus the area of access detection is part of its monitoring area.

3. Method in accordance with Claim 1, **characterized by the fact** that the access detection takes place by means of an access sensor located in the access area.

4. Method in accordance with any of Claims 1 to 3, **characterized by the fact** that the monitoring area is monitored for monitoring changes in the status data of the tracker assigned to a person via depth information detected by a 3-D sensor, for example in relation to changes in a depth map or a point cloud of the monitoring area.

5. Method in accordance with Claim 4, **characterized by the fact** that the depth information is determined by means of a time-of-flight sensor.

6. Method in accordance with any of Claims 1 to 5, **characterized by the fact** that an enveloping body enclosing the person is used as tracker.

7. Method in accordance with Claim 6, **characterized by the fact** that a cylinder is selected as enveloping body.

8. Method in accordance with any of Claims 1 to 7, **characterized by the fact** that the status data of the tracker, which change over the time of a person's stay in the monitored area, are stored in a data memory as behaviour profile for further evaluation after this person has left the monitored area.

9. Method in accordance with any of Claims 1 to 8, **characterized by the fact** that after a positive access detection in the case of a nonpersonally occupied monitored area, the lighting in the monitored area is switched to a first state.

10. Method in accordance with any of Claims 1 to 9, **characterized by the fact** that one or more of the following building installations are controlled depending on the change or changes in status data recorded via a person's tracker after the entering of a person:
- lighting,
- shading,
- air-conditioning,
- heating,
- reporting system for incidents and/or hazards.

11. Method in accordance with any of Claims 1 to 10, **characterized by the fact** that as a result of the status data of the tracker obtained from the monitoring area of the persons present in it, one or more building installations are influenced if the sensor data of one or more sensors, which record other data than the situation detector, give cause for an influence on the building installation.

12. Method in accordance with claim 8, **characterized by the fact** that stored status data profiles for a specific person are also examined for recurring behavior patterns and, upon detection of recurring behavior patterns and the current realization of the approach that such a recurring behavior pattern is about to repeat itself, the one or more building installations associated with the expected status are controlled in the predefined manner in an anticipatory way.

## Revendications

1. Procédé de commande d'une installation de bâtiment en fonction d'au moins une situation personnelle prédéfinie détectée dans la zone de surveillance d'un détecteur de situation, procédé avec lequel
- dans une première étape, un enregistrement d'accès est effectué pour enregistrer si une personne va entrer, entre ou est entrée dans la zone surveillée,
- en cas de détection positive d'accès et d'une zone de surveillance non occupée par des personnes, une installation de bâtiment qui influence la zone de surveillance peut être mise dans un état initial,
- après la détection d'une personne entrant dans la zone de surveillance, dans une deuxième étape la zone de surveillance est surveillée en ce qui concerne l'apparition de l'au moins une situation personnelle, **caractérisé en ce qu'**
- un tracker (4) est attribué à chaque personne entrant dans la zone de surveillance, un corps virtuel représentant la personne en géométrie simplifiée étant utilisé comme tracker, auquel corps virtuel les données de condition propres à la personne, dérivées des données collectées par le détecteur de situation, sont affectées, et
- la surveillance de cette personne en ce qui concerne ses changements d'état est ensuite effectuée par le biais des changements associés dans les données d'état du tracker, et
- la commande d'au moins une installation de bâtiment est effectuée lorsque les données d'état spécifiques à la personne associées au tracker (4) correspondent à celles d'une situation prédéterminée.

2. Procédé selon la revendication 1, **caractérisé en ce que** la détection d'accès est effectuée avec le détecteur de situation et ainsi la zone de la détection d'accès fait partie de sa zone de surveillance.

3. Procédé selon la revendication 1, **caractérisé en ce que** la détection d'accès s'effectue au moyen d'un capteur d'accès situé dans la zone d'accès.

4. Procédé selon l'une des revendications 1 à 3, **caractérisé en ce que** la zone de surveillance est surveillée pour surveiller les changements des données d'état du tracker attribué à une personne au moyen d'informations de profondeur détectées par un capteur 3-D, par exemple en relation avec des changements dans une carte de profondeur ou un nuage de points de la zone de surveillance.

5. Procédé selon la revendication 4, **caractérisé en ce que** l'information de profondeur est déterminée au moyen d'un capteur de temps de vol.

6. Procédé selon l'une des revendications 1 à 5, **caractérisé en ce qu'**un corps enveloppant entourant la personne est utilisé en tant que tracker.

7. Procédé selon la revendication 6, **caractérisé en ce qu'**un cylindre est choisi comme corps enveloppant.

8. Procédé selon l'une des revendications 1 à 7, **caractérisé en ce que** les données d'état du tracker, qui changent au cours du temps du séjour d'une personne dans la zone surveillée, sont enregistrées dans une mémoire de données comme profil de comportement pour d'autres évaluations après que cette personne a quitté la zone surveillée.

9. Procédé selon l'une des revendications 1 à 8, **caractérisé en ce qu'**après une détection d'accès positive dans le cas d'une zone surveillée non occupée par des personnes, l'éclairage dans la zone surveillée est commuté dans un premier état.

10. Procédé selon l'une des revendications 1 à 9, **caractérisé en ce qu'**une ou plusieurs des installations de bâtiment suivantes sont commandées en fonction de la modification ou des modifications des données d'état enregistrées après l'apparition d'une personne par l'intermédiaire du tracker de cette personne:
- l'éclairage,
- l'ombre,
- l'air conditionné,
- le chauffage,
- système de signalement des incidents et/ou des dangers.

11. Procédé selon l'une des revendications 1 à 10, **caractérisé en ce qu'**en raison des données d'état du tracker obtenues à partir de la zone de surveillance de la ou des personnes qui s'y trouvent, une ou plusieurs installations de bâtiment sont influencées si les données d'un ou plusieurs capteurs qui enregistrent des données autres que le détecteur de situation donnent lieu à une influence sur l'installation de bâtiment.

12. Procédé selon la revendication 8, **caractérisé en ce que** des profils de données d'état mémorisés pour une personne déterminée sont également examinés pour détecter des modèles de comportement récurrents et, si des modèles de comportement récurrents sont détectés et que l'on reconnaît actuellement qu'un tel modèle de comportement récurrent est sur le point de se répéter, l'une ou plusieurs installations du bâtiment associées à l'état attendu sont commandées au préalable de manière prédéfinie.
